# EUROPÄISCHE PATENTSCHRIFT

(11) **EP 1 493 544 B1**
(45) Veröffentlichungstag und Bekanntmachung des Hinweises auf die Patenterteilung: **22.11.2006**
(21) Anmeldenummer: 04012674.0
(22) Anmeldetag: 28.05.2004
(51) Int. Cl.: B29C 45/73, B29C 35/00, B29C 33/04

(54) **Temperiervorrichtung für Spritzgiesswerkzeuge**
Thermostatic device for injection molds
Dispositif de régulation la température d'outils de moulage

(30) Priorität: 30.06.2003 DE 10329494
(43) Veröffentlichungstag der Anmeldung: 05.01.2005
(73) Patentinhaber: Technotrans AG, 48336 Sassenberg (DE)
(72) Erfinder: Peick, Hubert, 59302 Oelde (DE); Wagner, Christiane, 48231 Warendorf (DE); Kulke, Andreas, 59269 Beckum (DE); Henning, Peter, 59368 Werne (DE)
(74) Vertreter: TER MEER - STEINMEISTER & PARTNER GbR

(56) Entgegenhaltungen:
- EP-A- 0 953 425
- DE-A- 3 905 751
- DE-A- 10 213 835
- DE-U- 9 203 032
- US-A- 5 281 124
- US-B1- 6 463 999
- MELZ B ET AL: "GENAUES TEMPERIEREN IN SEKUNDARKREISTECHNIK" KUNSTSTOFFBERATER, KUNSTSTOFF VERLAG. ISERNHAGEN, DE, Bd. 33, Nr. 5, 1. Mai 1988 (1988-05-01), Seite 42, XP000020775 ISSN: 0172-6374
- "MODULARE TEMPERIER-SYSTEME" KUNSTSTOFFBERATER, KUNSTSTOFF VERLAG. ISERNHAGEN, DE, Bd. 35, Nr. 5, 1. Mai 1990 (1990-05-01), Seite 8, XP000176941 ISSN: 0172-6374

## Beschreibung

Die Erfindung betrifft eine Temperiervorrichtung für Spritzgiesswerkzeuge, insbesondere für CD's oder DVD's, bei welchen Spritzgiesswerkzeugen in mehreren Bereichen unterschiedliche Temperatureinstellungen erforderlich sind.

Die üblicherweise bei der Herstellung von CD's oder DVD's verwendeten Spritzgiesswerkzeuge erfordern eine Temperierung in verschiedenen Positionen, für die bis zu vier Temperierkreisläufe benötigt werden. Von diesen vier Temperierkreisläufen werden zwei Kreisläufe für die Temperierung der Werkzeughälften verwendet, die den Formhohlraum des Spritzlings auf Produktionstemperatur erwärmen. Die hier benötigte Temperatur liegt im allgemeinen im Bereich von 60 bis 140°C und richtet sich im einzelnen nach dem zu produzierenden Spritzling, wie z.B. CD, CD-R, CD-RW, DVD, DVD-R, DVD-RW, usw.. Weiterhin ist es zumeist notwendig, die Angiessbuchse und die Auswerfer- und/oder Stanzereinheit (im folgenden "Auswerfereinheit") zu temperieren. Der hier angewendete Temperaturbereich liegt etwa zwischen 30 und 100°C und stets unterhalb der Werkzeughälftentemperatur. Dabei ist es durchaus möglich, dass die Angiessbuchse und die Auswerfereinheit auf unterschiedlichen Temperaturen zu halten sind. Schliesslich kann es auch vorteilhaft sein, den unmittelbaren Umgebungsbereich des Formhohlraums vor dem Auswerfen des Spritzlings kurzzeitig zu kühlen und so die Erstarrung des Spritzlings und damit das gesamte Herstellverfahren zu beschleunigen.

Für diese Temperieranforderungen werden üblicherweise einzelne Temperiergeräte, beispielsweise drei oder vier Temperiergeräte eingesetzt. Daraus ergeben sich mehrere Nachteile.

Zunächst müssen die Einzelgeräte mit den jeweiligen Anschlussschnittstellen für Kühlwasser, Temperierwasser, elektrische Einspeisung und Datenbusverbindung in die Spritzgiessmaschine mit entsprechend hohem Montageaufwand installiert werden. Für mehr als zwei Temperiergeräteeinheiten ist oftmals kein Platz innerhalb der Spritzgiessmaschine vorhanden, so dass die zusätzlichen Geräte neben der Maschine aufgestellt werden müssen.

Wegen der Verwendung von mehreren Einzelgeräten können Synergieeffekte nicht genutzt werden, so dass alle Einzelgeräte über alle Funktionen verfügen müssen, die zur Temperierung notwendig sind. Eine interne Leistungsverteilung zwischen den Einzelgeräten ist nicht möglich, so dass die elektrische Leistung aller Geräte unnötig hoch ausgelegt werden muss. Die gesamte Energiebilanz ist daher relativ ungünstig.

Die DE 102 13 835 A1 beschreibt eine Temperatursteuereinheit für eine Formanordnung. Im einzelnen soll es sich um eine Formtemperatur-Steuereinheit handeln. Dem Erfinder geht es vor allem darum, die Verrohrungsverbindungen für die Zufuhr und das Ablassen von Kühlwasser zwischen der Kühlwasserzufuhr bzw. -abfuhr und einer nicht näher dargestellten Formmaschine zu vereinfachen. Zu diesem Zweck wird ein Kühlwasser-Verteilungssystem vorgeschlagen, das für mehrere Kühlwasser-Verbrauchsstellen gemeinsame Verteiler- bzw. Sammelleitungen vorsieht, so dass für die Gesamtanlage nur ein Kühlwasser-Zufuhranschluß und ein Kühlwasser-Ablaßanschluß notwendig sind. Einzelne Unterkreise sind an die Sammelleitungen angeschlossen. In den Unterkreisen befinden sich auch Heizeinrichtungen, die das ankommende Kühlwasser auf eine gewünschte Temperatur aufheizen soll.

Die EP-A-0 953 425 befaßt sich mit einem Verfahren und einer Einrichtung zum Temperieren von Gußformen. Die Einrichtung beschreibt eine Temperiereinrichtung mit einem Primärkreislauf und einem Sekundärkreislauf, die über einen Wärmetauscher verbunden sind. Der Sekundärkreislauf, der den eigentlichen Temperierkreislauf bildet, bildet den einzigen Temperierkreislauf.

Die US 6.463.999 B1 beschreibt ein Mehrkreis-Temperatursteuersystem mit einem "hydraulischen Bus". Es geht offenbar vor allem um das Verteilen und Sammeln von Temperierfluid in bezug auf einzelne Temperierkreise.

In einem Aufsatz Melz B et al. "Genaues Temperieren in Sekundärkreistechnik" in der Zeitschrift "Kunststoffberater", Kunststoff Verlag Isernhagen, Bd. 33, Nr. 5.1, Mai 1988, Seite 42, wird ein Heiz-Kühl-System mit flüssigem Wärmeträger beschrieben. Im Primärkreis befindet sich ein Durchlauferhitzer, und an den Primärkreis sind drei Sekundärkreis angeschlossen. Über die Anwendung enthält der Aufsatz keine näheren Angaben.

In dem Aufsatz "Modulare Temperier-Systeme", aus Kunststoffberater, Kunststoff Verlag, Insernhagen, Bd. 35, Mai 1990, Seite 8, geht es um eine Werkzeugtemperierung mit unterschiedlich temperierten Zonen.

Der Erfindung liegt die Aufgabe zugrunde, eine Temperiervorrichtung zu schaffen, die die Funktionen der mehreren Einzelgeräte in einer Temperiergeräteeinheit zusammenfasst. Es soll damit möglich sein, neben dem platzsparenden Aufbau Synergieeffekte zu nutzen.

Zur Lösung dieser Aufgabe ist die erfindungsgemässe Temperiervorrichtung dadurch gekennzeichnet, dass die Vorrichtung einen umgewälzten inneren Temperiermittel-Kreislauf, der mit einem bauseitigen Kühlwassernetz in Wärmeaustausch steht und in einer Bypassleitung zwischen Vorlauf und Rücklauf eine Heizeinrichtung aufweist und an dessen Vorlauf und Rücklauf folgende Unterkreise angeschlossen ist:
- wenigstens ein Heizkreis, dessen Vorlauf an der Abzweigung vom Vorlauf des inneren Kreislaufs ein durch einen Temperatur-Sensor geregeltes Regelventil enthält und der zwischen Rücklauf und Vorlauf stromabwärts des Regelventils eine Verbindungsleitung mit einer Heizeinrichtung sowie weiter stromabwärts im Vorlauf eine Umwälzpumpe aufweist;
wenigstens einer der folgenden weiteren Unterkreise:
- ein erster Kühlkreis, der mit Vorlauf und Rücklauf unmittelbar an Vorlauf und Rücklauf des inneren Kreislaufs angeschlossen ist; und
- ein zweiter, separat regelbarer Kühlkreis, dessen Vorlauf und Rücklauf unmittelbar mit Vorlauf und Rücklauf des inneren Kreislaufs verbunden sind und der im Vorlauf ein Regelventil aufweist, das mithilfe eines Temperatursensors regelbar ist.

Die Begriffe "Heizkreis" und "Kühlkreis" sind hier nach der überwiegend zu erfüllenden Aufgabe gewählt. Grundsätzlich sind alle Temperierkreise in der Lage, sowohl zu heizen als auch zu kühlen. Anders ausgedrückt, sind Heizkreise solche, in denen eine Temperierung auf einer höheren Temperatur angestrebt wird, während Kühlkreise zur Absenkung der Temperatur auf einem niedrigerem Temperaturniveau vorgesehen sind.

Die erfindungsgemässe Vorrichtung umfasst somit als Kernstück einen inneren Temperiermittel-Kreislauf, der beispielsweise durch Wärmeaustausch mit dem Wasserleitungsnetz auf dessen Temperatur gehalten oder auch durch eine integrierte Heizeinrichtung auf eine höhere Temperatur erwärmt werden kann.

Von diesem inneren Kreislauf kann beispielsweise unmittelbar ein Kühlkreislauf abzweigen, der sich beispielsweise zur Kühlung des Auswerferbereichs eines Spritzgiesswerkzeugs eignet. Es ist aber auch möglich, einen Kühlkreislauf abzweigen zu lassen und in diesem Kühlkreislauf ein Regelventil vorzusehen, so dass über eine Volumenstromregelung der Grad der effektiv erreichten Kühlung geregelt werden kann. Eine derartige Kühlung kommt beispielsweise für den Angiessbereich in Betracht. Ferner kann ein Kühlkreislauf angeschlossen werden, in dem sich Ventile befinden, die nur während einer kurzen Phase vor dem Auswerfen eines Spritzlings öffnen und dadurch den unmittelbaren Umgebungsbereich des Formhohlraums kühlen. Dadurch kann die Erstarrung des Spritzlings und damit der Verfahrensablauf insgesamt beschleunigt werden.

Schliesslich kann wenigstens ein Heizkreislauf an den inneren Kreislauf angeschlossen sein, in dem jedoch das Temperiermittel mit einer eigenen Umwälzpumpe umgewälzt wird. Zu diesem Zweck befindet sich unmittelbar an der Abzweigung des Vorlaufs des Heizkreislaufes vom Vorlauf des inneren Kreiselaufs ein Ventil, dass mithilfe eines im Vorlauf des Heizkreislaufs befindlichen Temperatursensors geregelt wird und dafür sorgt, dass sich die Temperatur im Heizkreislauf auf einem zumeist erheblich höheren Niveau befindet als die Temperatur im inneren Kreislauf. Die Regelung erfolgt dadurch, dass das Ventil mehr oder weniger schliesst, wenn die Temperatur des Temperiermediums erhöht werden muss, so dass das Temperiermedium über eine Bypassleitung, die sich zwischen Vorlauf und Rücklauf des Heizkreislaufs befindet und eine Heizeinrichtung enthält, geführt wird. Andererseits wird das Ventil geöffnet, so dass das kühlere Temperiermedium aus dem inneren Kreislauf in den Heizkreislauf eintritt und eine entsprechende Menge des Temperiermediums über den Rücklauf des Heizkreislaufs abgegeben wird, wenn die Temperatur des Temperiermediums im Heizkreislauf zu hoch ist. Das verwendete Ventil kann ein Mischventil mit variabler Öffnungsstellung sein, so dass eine möglichst genaue Einhaltung der gewünschten Temperatur im Heizkreislauf möglich ist.

Der innere Kreislauf des erfindungsgemässen Geräts steht vorzugsweise in Wärmeaustausch mit dem Wasserleitungsnetz des Betriebes. Soll die Temperatur des inneren Kreislaufs erhöht werden, so wird das Temperiermittel nicht über den Wärmetauscher, sondern durch eine Bypassleitung und über eine Heizeinrichtung geleitet. Inwieweit das Temperiermedium im inneren Kreislauf des Gerätes über den Wärmetauscher oder über die Heizeinrichtung geleitet wird, hängt von der Stellung eines Mischventils ab, das ein Ventil mit stufenlos regelbarer Öffnungsstellung sein kann.

Eine erfindungsgemässe Vorrichtung gestattet die Nutzung von Synergieeffekten, indem beispielsweise die Abwärme von Kühlvorgängen für die Temperierung in zu beheizenden Bereichen genutzt werden kann.

Es ist nur ein Gerät erforderlich, und die Erfassung der Daten für die einzelnen Regelvorgänge ist wesentlich einfacher, als in den Fällen, in denen es notwendig ist, verschiedene Einzelgeräte zusammenzufassen. Insbesondere können die gesamte Verkabelung und die Herstellung aller Schlauch- und Rohrverbindungen bereits beim Hersteller erfolgen, so dass der Montageaufwand beim Aufbau der Spritzgiessanlage darauf beschränkt werden kann, die einzelnen Temperiermittelanschlüsse mit der Spritzgiessmaschine zu verbinden und eine Verbindung zum Wasserleitungsnetz herzustellen.

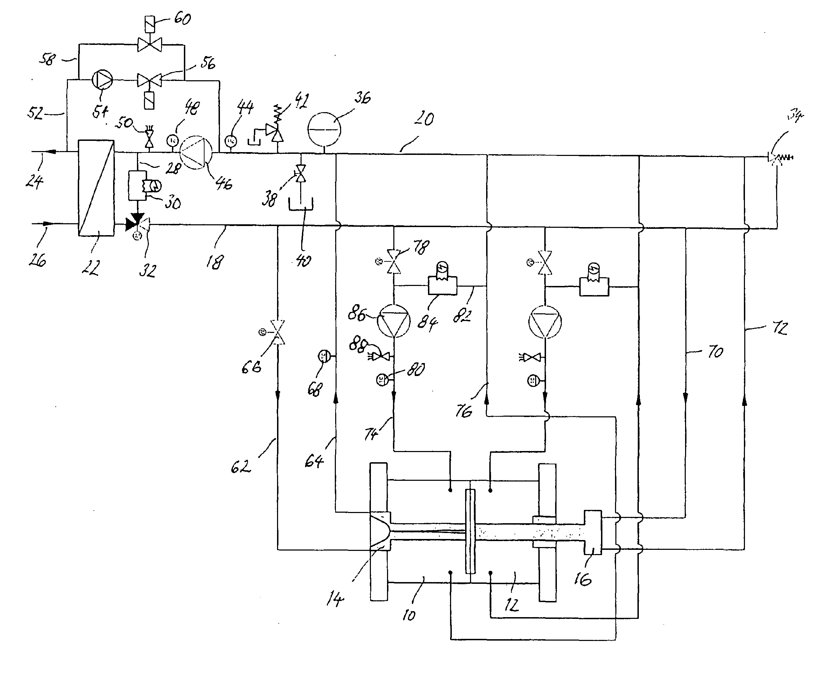

Im folgenden werden bevorzugte Ausführungsbeispiele der Erfindung anhand der beigefügten Zeichnung näher erläutert.

Die einzige Figur ist ein schematisches Schaltbild einer erfindungsgemässen Vorrichtung in Verbindung mit einer schematisch angedeuteten Spritzgiessmaschine.

In der Zeichnung sind die beiden Formhälften oder Werkzeughälften eines Spritzgiesswerkzeugs mit 10,12 bezeichnet. Im Bereich der links in der Zeichnung dargestellten Werkzeughälfte 10 ist eine Angiessbuchse 14 gezeigt, und auf der rechten Seite befindet sich in der zweiten Werkzeughälfte 12 ein Auswerfer 16. Wie den in der Zeichnung dargestellten Leitungen zu entnehmen ist, werden die beiden Werkzeughälften 10,12, die Angiessbuchse 14 und der Auswerfer 16 bei der dargestellten Ausführungsform temperiert, wie im einzelnen erläutert werden soll.

Die erfindungsgemässe Temperiervorrichtung weist einen im Gerät umgewälzten Temperiermittel-Kreislauf auf, der als innerer Kreislauf bezeichnet werden soll und ein Leitungssystem umfasst, das einen Vorlauf 18 und einen Rücklauf 20 aufweist. Der innere Kreislauf steht über einen Wärmetauscher 22, der hier nur als Beispiel gezeigt ist, mit dem bauseitigen Kühlwassernetz 24,26 in Wärmeaustausch. Benachbart zu dem Wärmetauscher 22 befindet sich jedoch eine Bypassleitung, die eine Umgehung des Wärmetauschers gestattet und in der sich eine Heizeinrichtung 30 befindet. An der Einmündung der Bypassleitung 28 in den Vorlauf 18 befindet sich ein 3/2-Wegeventil 32, von dessen Stellung es abhängt, ob das Temperiermittel im inneren Kreislauf durch den Wärmetauscher 22 oder durch die Heizeinrichtung 30 strömt. Die Temperatur des Temperiermediums im inneren Kreislauf kann somit mithilfe des Wärmetauschers 22 gesenkt und mithilfe der Heizeinrichtung 30 erhöht werden. Wenn sich das Temperiermedium auf einer höheren Temperatur befindet, muss in denjenigen Positionen, in denen eine Heizwirkung gewünscht ist, weniger zusätzliche Heizenergie aufgebracht werden, während andererseits die Kühlwirkung geringer ist. Befindet sich das Temperiermedium im inneren Kreislauf einer niedrigeren Temperatur, so liegen die Verhältnisse umgekehrt.

Als Temperiermittel, das in dem inneren Kreislauf umgewälzt wird, kommt im allgemeinen Wasser in Betracht, das gegebenenfalls mit Zusätzen versehen werden kann. Am Übergang vom Vorlauf 18 zum Rücklauf 20 befindet sich ein Differenzdruck-Überströmventil 34. Im Rücklauf 20 befinden sich in demjenigen Bereich, der an den Wärmetauscher 22 bzw. die Bypassleitung 28 angrenzt, hintereinander ein Druckausgleichbehälter 36, ein Auslassventil 38, das es gestattet, das Temperierfluid in einen Tank 40 oder anderweitig abzulassen, ein Überdruckventil 42, ein Drucksensor 44, eine Umwälzpumpe 46, ein Temperatursensor 48 und ein Entlüftungsventil 50.

Von dem Wasserleitungsnetz 24,26 geht eine Brückenleitung 52 aus, die den Wärmetauscher 22 und die Bypassleitung 28 überbrückt und zwischen dem Drucksensor 44 und der Umwälzpumpe 46 in den Rücklauf mündet. In der Brückenleitung befinden sich hintereinander eine Pumpe 54 und ein Ventil 56. Die Brückenleitung 52 gestattet es, Wasser aus dem Leitungsnetz in den inneren Kreislauf einzulassen.

Eine weitere Brückenleitung, die mit 58 bezeichnet ist, überbrückt ihrerseits die erste Brückenleitung 52, sie dient dazu, überschüssiges Temperiermittel aus dem inneren Kreislauf durch Öffnung eines Ventils 60 in den bauseitigen Kühlwasserkreis zurückzuführen. Die beiden Brückenleitungen mit den in diesen enthaltenen Organen bilden somit eine Druckregeleinheit zur Regelung des Druckes im inneren Kreislauf.

Die zuvor beschriebenen Teile bilden den inneren Kreislauf des erfindungsgemässen Geräts. Von diesem inneren Kreislauf gehen verschiedene Leitungssysteme aus, mit denen verschiedene Temperieraufgaben - Kühl- und Heizaufgaben - wahrgenommen werden können. Zunächst gehen von Vorlauf 18 und Rücklauf 20 des inneren Kreislaufs Vorlauf 62 und Rücklauf 64 eines Kühlkreises aus, der mit der Angiessbuchse 14 verbunden ist und diese durchströmt. Im Interesse einer möglichst genau einzuhaltenden Kühltemperatur ist im Vorlauf 62 des Kühlkreises ein Regelventil 66 vorgesehen, das nach Massgabe der Messwerte eines im Rücklauf befindlichen Temperatursensors 68 eine Volumenstromregelung durchführt, von deren Volumenstrom der Grad der in der Angiessbuchse 14 erzielten Kühlung abhängt. Dieser Kühlkreislauf benötigt keine eigene Umwälzpumpe, da er von der Umwälzpumpe 36 im inneren Kreislauf in ausreichenden Masse umgewälzt wird. Der Kühlkreislauf steht in Verbindung mit dem inneren Kreislauf aus Vorlauf 18 und Rücklauf 20, wie es die Zeichnung zeigt.

Ein weiterer Kühlkreislauf ist zur Kühlung des Auswerfers 16 vorgesehen. In diesem Fall sind an die Einhaltung einer bestimmten Höhe der Kühltemperatur nur geringe Anforderungen zu stellen. Vorlauf 70 und Rücklauf 72 stehen in offener Verbindung mit Vorlauf und Rücklauf 18,20 des inneren Kreislaufs. Das Kühlwasser wird durch die Umwälzpumpe 46 des inneren Kreislaufs durch diesen Kühlkreis 70,72 und den Auswerfer 16 gedrückt. Dies ist somit die zweite Art der Kühlung, die das erfindungsgemässe System zulässt. Weitere Arten der Kühlung, beispielsweise auch Kühlkreise, die zeitlich so gesteuert sind, dass sie nur zu bestimmten Zeiten des Spritzzyklus Kühlflüssigkeit umwälzen, können ebenfalls an den inneren Kreis angeschlossen werden.

Anschliessend sollen zwei Heizkreise beschrieben werden, deren Aufgabe darin besteht, die beiden Werkzeughälften 10,12 auf Spritztemperatur zu erwärmen. Da zwei Heizkreise für die beiden Werkzeughälften 10,12 vorgesehen sind, die im Prinzip vollständig gleich sind, wenn sie auch eine getrennte Regelung zulassen, reicht es aus, einen der Heizkreise genauer zu beschreiben.

Der Heizkreis für die in der Zeichnung links gezeigte Werkzeughälfte 10 umfasst einen Vorlauf 74 und einen Rücklauf 76. Unmittelbar im Anschluss an die Abzweigung des Vorlaufs 74 vom Vorlauf 18 des inneren Kreises befindet sich ein Regelventil 78, das nach Massgabe der Messungen eines weiter stromabwärts im Vorlauf 74 angeordneten Temperatursensors 80 öffnet und schliesst. Unmittelbar stromabwärts des Regelventils 78 sind Vorlauf 74 und Rücklauf 76 des Heizkreises durch eine Verbindungsleitung 82 verbunden, in der sich eine Heizeinrichtung 84 befindet. In der Vorlaufleitung folgen weiter stromabwärts eine Umwälzpumpe 86, ein Entlüftungsventil 88 und der bereits erwähnte Temperatursensor 80. Als Beispiel kann angenommen werden, dass die linke Formhälfte 10 auf eine Temperatur von 120°C erwärmt werden soll. Da die Temperatur im inneren Kreislauf im allgemeinen niedriger liegt, wird bei dem beschriebenen Heizkreis das Regelventil 78 zumindest in der Anfangsphase geschlossen sein, so dass das Wasser im Heizkreis mithilfe der Umwälzpumpe 86 umgewälzt wird und dabei über die Heizeinrichtung 84 läuft. Nur wenn die Temperatur im Heizkreis über den gewünschten Wert ansteigt, wird das Regelventil 78 geöffnet und kühleres Wasser aus dem inneren Kreislauf eingelassen, während wärmeres Wasser über den Rücklauf 76 des Heizkreises in den inneren Kreis abgegeben wird. Das Regelventil 78 ist vorzugsweise ein Ventil mit variabler Öffnungsstellung, das eine feine Regelung entsprechend den vom Temperatursensor 80 ermittelten Werten im Interesse einer Einhaltung einer gewünschten Temperatur im Heizkreislauf gewährleistet.

Die erfindungsgemässe Vorrichtung gestattet es, mithilfe eines einzigen Geräts sehr unterschiedliche Temperierungsaufgaben wahrzunehmen. Es wurde bereits darauf hingewiesen, dass die hier geschilderten Temperierungsaufgaben Beispiele darstellen. Weitere Temperierungsaufgaben können hinzukommen und in entsprechender Weise gelöst werden. Auf die Möglichkeit, eine periodische Kühlung zu bestimmten Zeiten eines Spritzvorganges durchzuführen, wurde bereits hingewiesen.

Die in der Beschreibung angegebene Zuordnung der einzelnen Temperierkreise zu den verschiedenen Funktionen hat nur Beispielcharakter. Wesentlich ist nur, dass mithilfe eines zentralen, inneren Kreislaufs sehr unterschiedliche Temperierfunktionen an verschiedenen Stellen eines Spritzgiesswerkzeugs wahrgenommen werden können, die unabhängig voneinander und gegebenenfalls auch unabhängig vom zentralen, inneren Kreislauf geregelt werden können. Die Zusammenfassung aller Temperieraufgaben in einem Gerät hat nicht nur den Vorteil der baulichen Vereinfachung und der erheblichen Erleichterung der Montage im Betrieb, sondern sie kann auch zu nennenswerten Synergieeffekten führen, indem beispielsweise die Abwärme von zu kühlenden Bereichen genutzt wird als Heizenergie in den zu erwärmenden Bereichen.

## Patentansprüche

1. Temperiervorrichtung für Spritzgiesswerkzeuge, insbesondere für CD's oder DVD's, bei welchen Spritzgiesswerkzeugen in mehreren Bereichen unterschiedliche Temperatureinstellungen erforderlich sind, **dadurch gekennzeichnet, dass** die Vorrichtung einen umgewälzten inneren Temperiermittel-Kreislauf (18,20) der mit einem bauseitigen Kühlwassernetz (24,26) in Wärmeaustausch steht und in einer Bypassleitung (28) zwischen Vorlauf (18) und Rücklauf (20) eine Heizeinrichtung (30) aufweist und an dessen Vorlauf (18) und Rücklauf (20) folgende Unterkreise angeschlossen ist:
- wenigstens ein Heizkreis (74,76), dessen Vorlauf (74) an der Abzweigung vom Vorlauf (18) des inneren Kreislaufs ein durch einen Temperatur-Sensor (80) geregeltes Regelventil (78) enthält und der zwischen Rücklauf (76) und Vorlauf (74) stromabwärts des Regelventils (78) eine Verbindungsleitung (82) mit einer Heizeinrichtung (84) sowie weiter stromabwärts im Vorlauf eine Umwälzpumpe (86) aufweist;
wenigstens einer der folgenden weiteren Unterkreise:
- ein erster Kühlkreis, der mit Vorlauf und Rücklauf (70,72) unmittelbar an Vorlauf und Rücklauf (18,20) des inneren Kreislaufs angeschlossen ist; und
- ein zweiter separat regelbarer Kühlkreis, dessen Vorlauf und Rücklauf (62,64) unmittelbar mit Vorlauf und Rücklauf (18,20) des inneren Kreislaufs verbunden sind und der im Vorlauf (62) ein Regelventil (66) aufweist, das mithilfe eines Temperatursensors (68) regelbar ist.

2. Temperiervorrichtung nach Anspruch 1, **dadurch gekennzeichnet, dass** der innere Kreislauf (18,20) eine Umwälzpumpe (46) enthält.

3. Temperiervorrichtung nach Anspruch 2, **dadurch gekennzeichnet, dass** ein Wärmetauscher (22) für den Wärmeaustausch mit dem Wasserleitungsnetz (24) vorgesehen ist.

4. Temperiervorrichtung nach einem der Ansprüche 1 bis 3, **dadurch gekennzeichnet dass** die Temperiervorrichtung Wasser als Temperiermittel enthält.

5. Temperiervorrichtung nach einem der vorhergehenden Ansprüche, **dadurch gekennzeichnet, dass** getrennte Heizkreise mit den Werkzeughälften (10,12) des Werkzeugs zur unabhängigen Erwärmung der Formhälften auf eine geeignete Spritztemperatur verbunden sind.

6. Temperiervorrichtung nach Anspruch 5, **dadurch gekennzeichnet, dass** ein von dem inneren Kreislauf (18,20) ausgehender Kühlkreis (70,72) mit dem Auswerferbereich des Werkzeugs verbunden ist.

7. Temperiervorrichtung nach Anspruch 5 oder 6, **dadurch gekennzeichnet, dass** ein separat regelbarer Kühlkreis (62,64) mit dem Angussbereich des Werkzeugs in Verbindung steht.

## Claims

1. Tempering device for injection moulding tools, especially for CDs or DVDs, which injection moulding tools require different temperature adjustments in a plurality of regions, **characterised in that** the device comprises a circulated inner tempering medium circuit (18, 20), which is in heat exchange with a cooling water network (24, 26) provided by the customer and in a bypass line (28) between flow (18) and return (20) has a heating device (30) and to the flow (18) and return (20) of which the following sub-circuits are connected:
- at least one heating circuit (74, 76), the flow (74) of which at the branch point from the flow (18) of the inner circuit contains a control valve (78) controlled by a temperature sensor (80) and which between the return (76) and flow (74) downstream of the control valve (78) has a connection line (82) with a heating device (84) and further downstream in the flow a circulating pump (86);
at least one of the following further sub-circuits:
- a first cooling circuit, which with its flow and return (70, 72) is directly connected to the flow and return (18, 20) of the inner circuit; and
- a second, separately controllable, cooling circuit, the flow and return (62, 64) of which are directly connected to the flow and return (18, 20) of the inner circuit and which in the flow (62) has a control valve (66) that is controllable by means of a temperature sensor (68).

2. Tempering device according to claim 1, **characterised in that** the inner circuit (18, 20) contains a circulating pump (46).

3. Tempering device according to claim 2, **characterised in that** a heat exchanger (22) is provided for heat exchange with the water pipe network (24).

4. Tempering device according to any one of claims 1 to 3, **characterised in that** the tempering device contains water as the tempering medium.

5. Tempering device according to any one of the preceding claims, **characterised in that** separate heating circuits are connected to the tool halves (10, 12) of the tool for independent heating of the mould halves to a suitable injection temperature.

6. Tempering device according to claim 5, **characterised in that** a cooling circuit (70, 72) running out from the inner circuit (18, 20) is connected to the ejector region of the tool.

7. Tempering device according to claim 5 or 6, **characterised in that** a separately controllable cooling circuit (62, 64) is in communication with the feed region of the tool.

## Revendications

1. Dispositif de régulation de la température d'outils de moulage, en particulier pour CD ou DVD, outils de moulage pour lesquels des réglages différents de la température sont nécessaires dans plusieurs zones, **caractérisé en ce que** le dispositif comporte un circuit interne (18, 20) de fluide de régulation, mis en circulation, qui est en échange de chaleur avec un réseau d'eau de refroidissement (24, 26) existant, ainsi qu'un dispositif de chauffage (30) dans une conduite de dérivation (28), entre l'aller (18) et le retour (20), et les sous-circuits suivants étant raccordés à l'aller (18) et au retour (20) :
- au moins un circuit de chauffage (74, 76) dont l'aller (74) contient, dans la dérivation de l'aller (18) du circuit interne, une soupape de régulation (78) régulée par une sonde de température (80), et qui comporte, entre le retour (76) et l'aller (74), en aval de la soupape de régulation (78), une conduite de liaison (82) avec un dispositif de chauffage (84) ainsi que plus en aval, dans l'aller, une pompe de circulation (86) ;
au moins l'un des autres sous-circuits suivants :
- un premier circuit de refroidissement qui est raccordé par un aller et un retour (70 ; 72), directement à l'aller et au retour (18, 20) du circuit interne ; et
- un deuxième circuit de refroidissement réglable séparément dont l'aller et le retour (62, 64) sont reliés directement à l'aller et au retour (18, 20) du circuit interne, et qui comporte dans l'aller (62) une soupape de régulation (66) qui est réglable au moyen d'une sonde de température (68) .

2. Dispositif de régulation de la température selon la revendication 1, **caractérisé en ce que** le circuit interne (18, 20) contient une pompe de circulation (46).

3. Dispositif de régulation de la température selon la revendication 2, **caractérisé en ce qu'**un échangeur de chaleur (22) est prévu pour l'échange de chaleur avec le circuit de distribution d'eau (24).

4. Dispositif de régulation de la température selon l'une des revendications 1 à 3, **caractérisé en ce que** le dispositif de régulation de la température contient de l'eau comme fluide de régulation de la température.

5. Dispositif de régulation de la température selon l'une des revendications précédentes, **caractérisé en ce que** des circuits de chauffage séparés sont reliés aux moitiés d'outil (10, 12) de l'outil, pour le chauffage indépendant des moitiés de moule à une température d'injection appropriée.

6. Dispositif de régulation de la température selon la revendication 5, **caractérisé en ce qu'**un circuit de refroidissement (70, 7,2), partant du circuit interne (18, 20), est relié à la zone de l'éjecteur de l'outil.

7. Dispositif de régulation de la température selon la revendication 5 ou 6, **caractérisé en ce qu'**un circuit de refroidissement (62, 64) réglable séparément est en liaison avec la zone d'injection de l'outil.
